# EUROPEAN PATENT APPLICATION

(11) **EP 4 391 637 A1**
(43) Date of publication of application: **26.06.2024**
(21) Application number: 22858646.7
(22) Date of filing: 02.08.2022
(51) Int. Cl.: H04W 28/02, H04W 28/06, H04W 52/36, H04W 72/23, H04W 76/27

(54) **METHOD AND DEVICE FOR TRANSMITTING BUFFER STATUS REPORT AND POWER HEADROOM REPORT BY TERMINAL IN RRC_INACTIVE STATE IN WIRELESS MOBILE COMMUNICATION SYSTEM**

(30) Priority: 18.08.2021 KR 20210109013
(71) Applicant: Blackpin Inc., Seoul 06377 (KR); Kim, Soenghun, Hanam-si, Gyeonggi-do 13010 (KR)
(72) Inventor: KIM, Soenghun, Hanam-si, Gyeonggi-do 13010 (KR)
(74) Representative: Puchberger & Partner Patentanwälte
(86) International application number: PCT/KR2022/011401
(87) International publication number: WO 2023/022408

(57) **Abstract**

A method for transmitting a buffer status and a power headroom by an RRC_INACTIVE terminal according to one embodiment of the present disclosure comprises the steps of: triggering a second resume procedure to the RRC_INACTIVE terminal; triggering a buffer status report; receiving an uplink grant; triggering a power headroom report; determining whether or not the buffer status report and the power headroom report are to be transmitted; and transmitting MAC PDU.

## Description

### TECHNOLOGY FIELD

The present disclosure relates to a method and apparatus for resuming an RRC connection and transmitting and receiving data in a wireless communication system.

### BACKGROUND TECHNOLOGY

In order to meet the growing demand for wireless data traffic after the commercialization of 4G communication systems, 5G communication systems have been developed. In order to achieve a high data rate, the 5G communication system has introduced an ultra-high frequency (millimeter wave: mmWave) band (e.g., such as the 60 GHz band). In order to mitigate the path loss of radio waves and increase the propagation distance of radio waves in the ultra-high frequency band, 5G communication systems employ beamforming, massive MIMO, Full Dimensional MIMO (FD-MIMO), array antenna, analog beamforming and large-scale antenna technologies. In the 5G communication system, scalability is increased by dividing the base station into a central unit and a distribution unit. In addition, the 5G communication system aims to support very high data rates and very low transmission delays in order to support various services.

### DETAILED DESCRIPTION OF THE INVENTION

### TECHNICAL PROBLEM

The disclosed embodiment relates to a method and apparatus for reporting a buffer state and power headroom by a terminal in an RRC_INACTIVE state in a wireless communication system. In particular, the already triggered buffer status report and power headroom report are canceled or maintained in consideration of whether all transmittable data of the terminal in the INACTIVE state can be transmitted.

### MEANS TO SOLVE THE PROBLEM

According to an embodiment of the present disclosure, in a method for transmitting a buffer status and power headroom by an RRC_INACTIVE terminal, the step of triggering a second resume procedure to the RRC_INACTIVE terminal, triggering a buffer status report, receiving an uplink grant It is characterized in that it includes the step of triggering the power headroom report, the step of determining whether to transmit the buffer status report and the power headroom report, and the step of transmitting the MAC PDU.

### EFFECT OF THE INVENTION

The disclosed embodiment provides a method and apparatus for transmitting and receiving data during RRC connection resumption in a wireless communication system.

### BRIEF DESCRIPTION OF THE DRAWINGS

FIG. 1a is a diagram illustrating the structure of a 5G system and an NG-RAN according to an embodiment of the present disclosure.
FIG. 1b is a diagram illustrating a radio protocol structure in a NR system according to an embodiment of the present disclosure.
FIG. 1c is a diagram illustrating transitions between RRC states according to an embodiment of the present disclosure.
FIG. 2a is a diagram illustrating operations of a terminal and a base station according to an embodiment of the present disclosure.
FIG. 2b is a diagram illustrating a first resumption procedure and a second resumption procedure according to an embodiment of the present disclosure.
FIG. 2c is a diagram illustrating a structure of an uplink MAC PDU used in a second resume procedure.
FIG. 2d is a diagram illustrating the structure of a general uplink MAC PDU according to an embodiment of the present disclosure.
FIG. 2e is a diagram illustrating a security key dml hierarchical structure.
FIG. 2f is a diagram illustrating the structure of a first BSR MAC CE and a second BSR MAC CE.
FIG. 2g is a diagram illustrating structures of a third buffer state MAC CE and a fourth BSR MAC CE.
FIG. 2h is a diagram illustrating a MAC-I calculation process and a ciphering process.
FIG. 3 is a flowchart for explaining an operation of a terminal according to an embodiment of the present disclosure.
FIG. 4a is a block diagram showing the internal structure of a terminal to which the present invention is applied.
FIG. 4b is a block diagram showing the internal structure of a base station to which the present invention is applied.

### EMBIDOMENTS FOR PRACTICING THE INVENTION

Hereinafter, embodiments of the present invention will be described in detail with the accompanying drawings. In addition, in describing the present invention, if it is determined that a detailed description of a related known function or configuration may unnecessarily obscure the subject matter of the present invention, such detailed description will be omitted. In addition, certain terms to be described later may be terms defined in consideration of functions in the present invention, which may vary according to the intention or custom of a user or operator. Therefore, the definition should be made based on the contents throughout this specification.

A term used in the following description to identify a connection node, a term referring to network entities, a term referring to messages, a term referring to an interface between network entities, and a term referring to various types of identification information, etc. are illustrated for convenience of description. Therefore, the present invention is not limited to the specific terms described below, and other terms indicating objects having equivalent technical meanings may be used.

For convenience of description below, the present invention uses terms and names defined in the 3rd Generation Partnership Project (3GPP) standard, which is the most up-to-date among existing communication standards. However, the present invention is not limited by the above terms and names and may be equally applied to systems conforming to other standards.

Table 1 lists the abbreviations used in the present invention.

**<Table 1 >**

| **Acronym** | **Full name** | **Acronym** | **Full name** |
|---|---|---|---|
| **5GC** | 5G Core Network | **RACH** | Random Access Channel |
| **ACK** | Acknowledgement | **RAN** | Radio Access Network |
| **AM** | Acknowledged Mode | **RA-RNTI** | Random Access RNTI |
| **AMF** | Access and Mobility Management Function | **RAT** | Radio Access Technology |
| **ARQ** | Automatic Repeat Request | **RB** | Radio Bearer |
| **AS** | Access Stratum | **RLC** | Radio Link Control |
| **ASN.1** | Abstract Syntax Notation One | **RNA** | RAN-based Notification Area |
| **BSR** | Buffer Status Report | **RNAU** | RAN-based Notification Area Update |
| **BWP** | Bandwidth Part | **RNTI** | Radio Network Temporary Identifier |
| **CA** | Carrier Aggregation | **RRC** | Radio Resource Control |
| **CAG** | Closed Access Group | **RRM** | Radio Resource Management |
| **CG** | Cell Group | **RSRP** | Reference Signal Received Power |
| **C-RNTI** | Cell RNTI | **RSRQ** | Reference Signal Received Quality |
| **CSI** | Channel State Information | **RSSI** | Received Signal Strength Indicator |
| **DCI** | Downlink Control Information | **SCell** | Secondary Cell |
| **DRB** | (user) Data Radio Bearer | **SCS** | Subcarrier Spacing |
| **DRX** | Discontinuous Reception | **SDAP** | Service Data Adaptation Protocol |
| **HARQ** | Hybrid Automatic Repeat Request | **SDU** | Service Data Unit |
| **IE** | Information element | **SFN** | System Frame Number |
| **LCG** | Logical Channel Group | **S-GW** | Serving Gateway |
| **MAC** | Medium Access Control | **SI** | System Information |
| **MIB** | Master Information Block | **SIB** | System Information Block |
| **NAS** | Non-Access Stratum | **SpCell** | Special Cell |
| **NG-RAN** | NG Radio Access Network | **SRB** | Signaling Radio Bearer |
| **NR** | NR Radio Access | **SRS** | Sounding Reference Signal |
| **PBR** | Prioritised Bit Rate | **SSB** | SS/PBCH block |
| **PCell** | Primary Cell | **SSS** | Secondary Synchronisation Signal |
| **PCI** | Physical Cell Identifier | **SUL** | Supplementary Uplink |
| **PDCCH** | Physical Downlink Control Channel | **TM** | Transparent Mode |
| **PDCP** | Packet Data Convergence Protocol | **UCI** | Uplink Control Information |
| **PDSCH** | Physical Downlink Shared Channel | **UE** | User Equipment |
| **PDU** | Protocol Data Unit | **UM** | Unacknowledged Mode |
| **PHR** | Power Headroom Report | | |
| **PLMN** | Public Land Mobile Network | | |
| **PRACH** | Physical Random Access Channel | | |
| **PRB** | Physical Resource Block | | |
| **PSS** | Primary Synchronisation Signal | | |
| **PUCCH** | Physical Uplink Control Channel | | |
| **PUSCH** | Physical Uplink Shared Channel | | |

Table 2 defines terms frequently used in the present invention.

**<Table 2>**

| **Terminology** | **Definition** |
|---|---|
| allowedCG-List | List of configured grants for the corresponding logical channel. This restriction applies only when the UL grant is a configured grant. If present, UL MAC SDUs from this logical channel can only be mapped to the indicated configured grant configuration. If the size of the sequence is zero, then UL MAC SDUs from this logical channel cannot be mapped to any configured grant configurations. If the field is not present, UL MAC SDUs from this logical channel can be mapped to any configured grant configurations. |
| allowedSCS-List | List of allowed sub-carrier spacings for the corresponding logical channel. If present, UL MAC SDUs from this logical channel can only be mapped to the indicated numerology. Otherwise, UL MAC SDUs from this logical channel can be mapped to any configured numerology. |
| allowedServi ngCells | List of allowed serving cells for the corresponding logical channel. If present, UL MAC SDUs from this logical channel can only be mapped to the serving cells indicated in this list. Otherwise, UL MAC SDUs from this logical channel can be mapped to any configured serving cell of this cell group. |
| Carrier frequency | Center frequency of the cell. |
| Cell | Combination of downlink and optionally uplink resources. The linking between the carrier frequency of the downlink resources and the carrier frequency of the uplink resources is indicated in the system information transmitted on the downlink resources. |
| Cell Group | In dual connectivity, a group of serving cells associated with either the MeNB or the SeNB. |
| Cell reselection | A process to find a better suitable cell than the current serving cell based on the system information received in the current serving cell |
| Cell selection | A process to find a suitable cell either blindly or based on the stored information |
| Dedicated signalling | Signaling sent on DCCH logical channel between the network and a single UE. |
| discardTimer | Timer to control the discard of a PDCP SDU. Starting when the SDU arrives. Upon expiry, the SDU is discarded. |
| F | The Format field in MAC subheader indicates the size of the Length field. |
| Field | The individual contents of an information element are referred to as fields. |
| Frequency layer | Set of cells with the same carrier frequency. |
| Global cell identity | An identity to uniquely identifying an NR cell. It is consisted of cellldentity and plmn-Identity of the first PLMN-Identity in plmn-IdentityList in SIB1. |
| gNB | Node providing NR user plane and control plane protocol terminations towards the UE and connected via the NG interface to the 5GC. |
| Handover | Procedure that changes the serving cell of a UE in RRC_CONNECTED. |
| Information element | A structural element containing single or multiple fields is referred as information element. |
| L | The Length field in MAC subheader indicates the length of the corresponding MAC SDU or of the corresponding MAC CE |
| LCID | 6-bit logical channel identity in MAC subheader to denote which logical channel traffic or which MAC CE is included in the MAC subPDU |
| MAC-I | Message Authentication Code - Integrity. 16-bit or 32-bit bit string calculated by NR Integrity Algorithm based on the security key and various fresh inputs |
| Logical channel | A logical path between a RLC entity and a MAC entity. There are multiple logical channel types depending on what type of information is transferred e.g. CCCH (Common Control Channel), DCCH (Dedicate Control Channel), DTCH (Dedicate Traffic Channel), PCCH (Paging Control Channel) |
| LogicalChan nelConfig | The IE LogicalChannelConfig is used to configure the logical channel parameters. It includes priority, prioritisedBitRate, allowedServingCells, allowedSCS-List, maxPUSCH-Duration, logicalChannelGroup, allowedCG-List etc. |
| logicalChann elGroup | ID of the logical channel group, as specified in TS 38.321, which the logical channel belongs to |
| MAC CE | Control Element generated by a MAC entity. Multiple types of MAC CEs are defined, each of which is indicated by corresponding LCID. A MAC CE and a corresponding MAC sub-header comprises MAC subPDU |
| Master Cell Group | In MR-DC, a group of serving cells associated with the Master Node, comprising of the SpCell (PCell) and optionally one or more SCells. |
| maxPUSCH-Duration | Restriction on PUSCH-duration for the corresponding logical channel. If present, UL MAC SDUs from this logical channel can only be transmitted using uplink grants that result in a PUSCH duration shorter than or equal to the duration indicated by this field. Otherwise, UL MAC SDUs from this logical channel can be transmitted using an uplink grant resulting in any PUSCH duration. |
| NR | NR radio access |
| PCell | SpCell of a master cell group. |
| PDCP entity reestablishm ent | The process triggered upon upper layer request. It includes the initialization of state variables, reset of header compression and manipulating of stored PDCP SDUs and PDCP PDUs. The details can be found in 5.1.2 of 38.323 |
| PDCP suspend | The process triggered upon upper layer request. When triggered, transmitting PDCP entity set TX_NEXT to the initial value and discard all stored PDCP PDUs. The receiving entity stop and reset t-Reordering, deliver all stored PDCP SDUs to the upper layer and set RX_NEXT and RX_DEL!V to the initial value |
| PDCP-config | The IE PDCP-Config is used to set the configurable PDCP parameters for signaling and data radio bearers. For a data radio bearer, discardTimer, pdcp-SN-Size, header compression parameters, t-Reordering and whether integrity protection is enabled are configured. For a signaling radio bearer, t-Reordering can be configured |
| PLMN ID Check | The process that checks whether a PLMN ID is the RPLMN identity or an EPLMN identity of the UE. |
| Primary Cell | The MCG cell, operating on the primary frequency, in which the UE either performs the |
| | initial connection establishment procedure or initiates the connection re-establishment procedure. |
| Primary SCG Cell | For dual connectivity operation, the SCG cell in which the UE performs random access when performing the Reconfiguration with Sync procedure. |
| priority | Logical channel priority, as specified in TS 38.321. an integer between 0 and 7. 0 means the highest priority and 7 means the lowest priority |
| PUCCH SCell | A Secondary Cell configured with PUCCH. |
| Radio Bearer | Logical path between a PDCP entity and upper layer (i.e. SDAP entity or RRC) |
| RLC bearer | RLC and MAC logical channel configuration of a radio bearer in one cell group. |
| RLC bearer configuration | The lower layer part of the radio bearer configuration comprising the RLC and logical channel configurations. |
| RX_DEL!V | This state variable indicates the COUNT value of the first PDCP SDU not delivered to the upper layers, but still waited for. |
| RX_NEXT | This state variable indicates the COUNT value of the next PDCP SDU expected to be received. |
| RX_REORD | This state variable indicates the COUNT value following the COUNT value associated with the PDCP Data PDU which triggered t-Reordering. |
| Serving Cell | For a UE in RRC_CONNECTED not configured with CA/DC there is only one serving cell comprising of the primary cell. For a UE in RRC_CONNECTED configured with CA/ DC the term 'serving cells' is used to denote the set of cells comprising of the Special Cell(s) and all secondary cells. |
| SpCell | Primary cell of a master or secondary cell group. |
| Special Cell | For Dual Connectivity operation the term Special Cell refers to the PCell of the MCG or the PSCell of the SCG, otherwise the term Special Cell refers to the PCell. |
| SRB | Signaling Radio Bearers" (SRBs) are defined as Radio Bearers (RBs) that are used only for the transmission of RRC and NAS messages. |
| SRB0 | SRB0 is for RRC messages using the CCCH logical channel |
| SRB1 | SRB1 is for RRC messages (which may include a piggybacked NAS message) as well as for NAS messages prior to the establishment of SRB2, all using DCCH logical channel; |
| SRB2 | SRB2 is for NAS messages and for RRC messages which include logged measurement information, all using DCCH logical channel. SRB2 has a lower priority than SRB1 and may be configured by the network after AS security activation; |
| SRB3 | SRB3 is for specific RRC messages when UE is in (NG)EN-DC or NR-DC, all using |
| | DCCH logical channel |
| SRB4 | SRB4 is for RRC messages which include application layer measurement reporting information, all using DCCH logical channel. |
| Suitable cell | A cell on which a UE may camp. Following criteria apply |
| | - The cell is part of either the selected PLMN or the registered PLMN or PLMN of the Equivalent PLMN list |
| | - The cell is not barred |
| | - The cell is part of at least one TA that is not part of the list of "Forbidden Tracking Areas for Roaming" (TS 22.011 [18]), which belongs to a PLMN that fulfils the first bullet above. |
| | - The cell selection criterion S is fulfilled (i.e. RSRP and RSRQ are better than specific values |
| t-Reordering | Timer to control the reordering operation of received PDCP packets. Upon expiry, PDCP packets are processed and delivered to the upper layers. |
| TX_NEXT | This state variable indicates the COUNT value of the next PDCP SDU to be transmitted. |
| UE Inactive AS Context | UE Inactive AS Context is stored when the connection is suspended and restored when the connection is resumed. It includes information below. |
| | the current KgNB and KRRCint keys, the ROHC state, the stored QoS flow to DRB mapping rules, the C-RNTI used in the source PCell, the cellIdentity and the physical cell identity of the source PCell, the spCellConfigCommon within ReconfigurationWithSync of the NR PSCell (if configured) and all other parameters configured except for: |
| | - parameters within ReconfigurationWithSync of the PCell; |
| | - parameters within ReconfigurationWithSync of the NR PSCell, if configured; |
| | - parameters within MobilityControlInfoSCG of the E-UTRA PSCell, if configured; |
| | - servingCellConfigCommonSIB; |

In the present invention, "to trigger" or "be triggered" and "to initiate" or "be initiated" may be used as the same meaning. In the present invention, "radio bearer for which the second resume procedure is allowed", "radio bearer for which the second resume procedure is set", and "radio bearer for which the second resume procedure is enabled" may all be used as the same meaning.

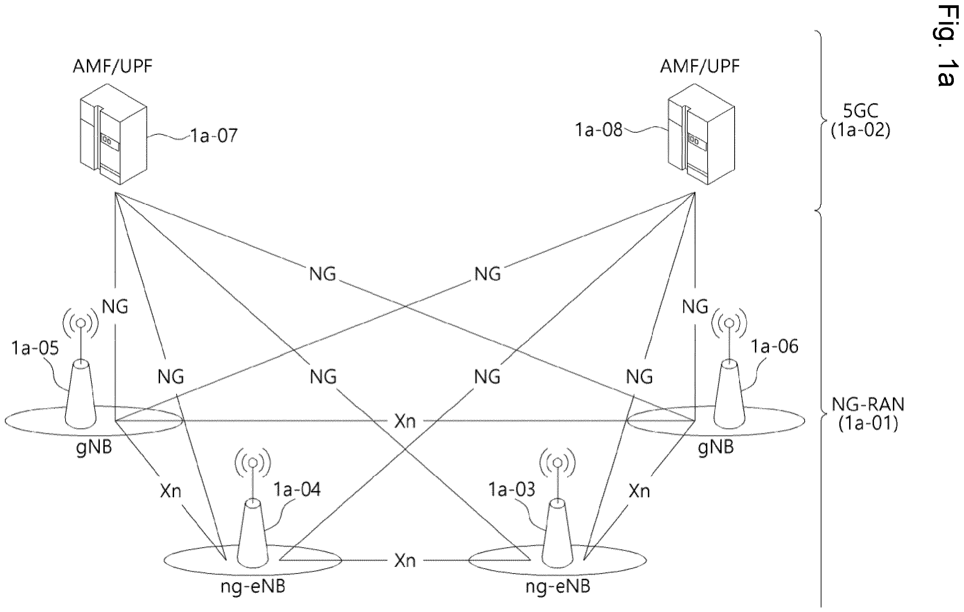

FIG. 1a is a diagram illustrating the structure of a 5G system and an NG-RAN according to an embodiment of the present disclosure.

The 5G system consists of NG-RAN (1a-01) and 5GC (1a-02). An NG-RAN node is one of the two below.
1: gNB providing NR user plane and control plane towards UE; or
2: ng-eNB providing E-UTRA user plane and control plane to UE side.

The gNBs (1a-05 to 1a-06) and ng-eNBs (1a-03 to 1a-04) are interconnected through an Xn interface. The gNB and ng-eNB are connected to an Access and Mobility Management Function (AMF) (1a-07) and a User Plane Function (UPF) (1a-08) through an NG interface. AMF (1a-07) and UPF (1a-08) can be composed of one physical node or separate physical nodes.

The gNBs (1a-05 to 1a-06) and ng-eNBs (1a-03 to 1a-04) host the functions listed below.
Radio bearer control, radio admission control, connection mobility control, dynamic allocation of resources to UEs on the uplink, downlink and sidelink (schedule), IP and Ethernet header compression, uplink data decompression and encryption of user data streams, AMF selection, routing of user plane data to UPF, scheduling and transmission of paging messages, scheduling and transmission of broadcast information (originating from AMF or O&M), when AMF selection is not possible with the information provided;
Measurement and measurement report configuration for mobility and scheduling, session management, QoS flow management and mapping to data radio bearers, RRC_INACTIVE support, radio access network sharing;

Close interaction between NR and E-UTRA, support for network slicing.

The AMF (1a-07) hosts functions such as NAS signaling, NAS signaling security, AS security control, S-GW selection, authentication, mobility management and location management.

The UPF (1a-08) hosts functions such as packet routing and forwarding, transport-level packet marking on the uplink and downlink, QoS management, and mobility anchoring for mobility.

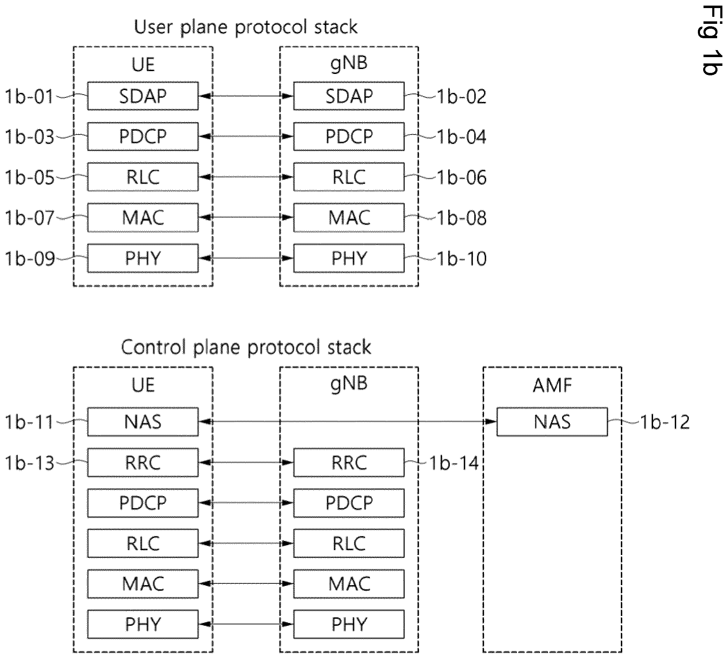

Figure 1b is a diagram showing the radio protocol structure of a 5G system.

The user plane protocol stack comprises SDAP (1b-01 to 1b-02), PDCP (1b-03 to 1b-04), RLC (1b-05 to 1b-06), MAC (1b-07 to 1b-08), PHY (1b-09 to 1b-10). The control plane protocol stack comprises NAS (1b-11 to 1b-12), RRC (1b-13 to 1b-14), PDCP, RLC, MAC, and PHY.

Each protocol sublayer performs functions related to the operations listed in Table 3.

**<Table 3>**

| Sublayer | Functions |
|---|---|
| NAS | Authentication, mobility management, security control etc. |
| RRC | System Information, Paging, Establishment, maintenance and release of an RRC connection, Security functions, Establishment, configuration, maintenance and release of Signaling Radio Bearers (SRBs) and Data Radio Bearers (DRBs), Mobility, QoS management, Detection of and recovery from radio link failure, NAS message transfer etc. |
| SDAP | Mapping between a QoS flow and a data radio bearer, Marking QoS flow ID (QFI) in both DL and UL packets. |
| PDCP | Transfer of data, Header compression and decompression, Ciphering and deciphering, Integrity protection and integrity verification, Duplication, Reordering and in-order delivery, Out-of-order delivery etc. |
| RLC | Transfer of upper layer PDUs, Error Correction through ARQ, Segmentation and re-segmentation of RLC SDUs, Reassembly of SDU, RLC re-establishment etc. |
| MAC | Mapping between logical channels and transport channels , Multiplexing/demultiplexing of MAC SDUs belonging to one or different logical channels into/from transport blocks (TB) delivered to/from the physical layer on transport channels, Scheduling information reporting, Priority handling between UEs, Priority handling between logical channels of one UE etc. |
| PHY | Channel coding, Physical-layer hybrid-ARQ processing, Rate matching, Scrambling, Modulation, Layer mapping, Downlink Control Information, Uplink Control Information etc. |

The UE supports three RRC states. Table 4 lists the characteristics of each state.

**<Table 4>**

| RRC state | Characteristic |
|---|---|
| RRC_IDLE | PLMN selection; Broadcast of system information; |
| | Cell re-selection mobility; |
| | Paging for mobile terminated data is initiated by 5GC; |
| | DRX for CN paging configured by NAS. |
| RRC_INACTIVE | PLMN selection; Broadcast of system information; Cell re-selection mobility; |
| | Paging is initiated by NG-RAN (RAN paging); |
| | RAN-based notification area (RNA) is managed by NG- RAN; |
| | DRX for RAN paging configured by NG-RAN; |
| | 5GC - NG-RAN connection (both C/U-planes) is established for UE; |
| | The UE AS context is stored in NG-RAN and the UE; |
| | NG-RAN knows the RNA which the UE belongs to. |
| RRC_CONNECTED | 5GC - NG-RAN connection (both C/U-planes) is established for UE; The UE AS context is stored in NG-RAN and the UE; NG-RAN knows the cell which the UE belongs to; |
| | Transfer of unicast data to/from the UE; |
| | Network controlled mobility including measurements. |

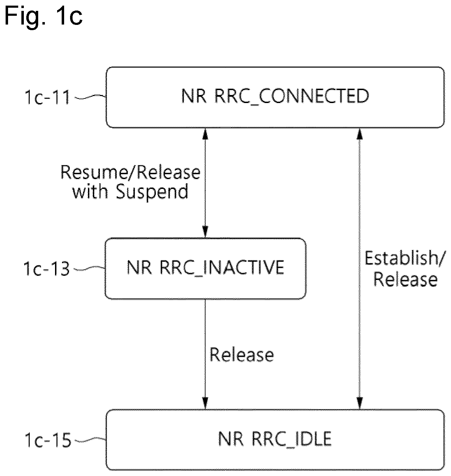

FIG. 1c is a diagram illustrating an RRC state transition. Between RRC_CONNECTED (1c-11) and RRC_INACTIVE (1c-13), state transition occurs by exchanging a resume message and a release message containing the suspend IE. State transition occurs between RRC_CONNECTED (1c-11) and RRC_IDLE (1c-15) through RRC connection establishment and RRC connection release. Through RRC connection release, state transition occurs from RRC_INACTIVE (1c-13) to RRC_IDLE (1c-15).

The state transition from RRC_INACTIVE to RRC_CONNECTED involves not only signal exchange between the terminal (UE) and the base station, but also context transfer and data path change between the base stations. If the terminal (UE) has a sufficiently large amount of data to transmit, these additional procedures can be fully justified, but otherwise, the efficiency of the network may deteriorate due to excessive overhead.

In the present invention, a new resume/resumption procedure capable of transmitting and receiving data without transitioning to RRC_CONNECTED is introduced. Hereinafter, a resume procedure for the purpose of transitioning a terminal in an RRC_INACTIVE state to an RRC_CONNECTED state is referred to as a first resume procedure, and a procedure in which a terminal in an RRC_INACTIVE state transmits/receives data while maintaining the RRC_INACTIVE state is referred to as a second resume procedure. Through the first resume procedure, the UE can resume the suspended RRC connection, and through the second resume procedure, the UE can resume data transmission and reception. The terminal may switch to the first resume procedure while performing the second resume procedure.

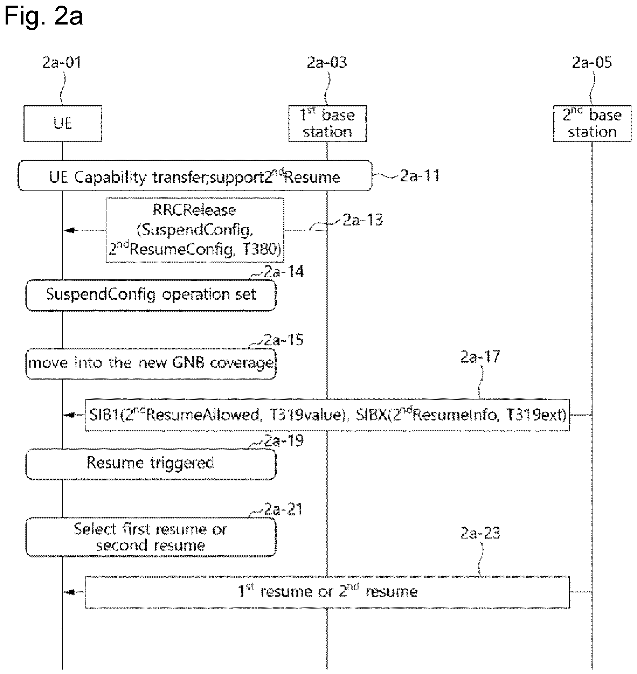

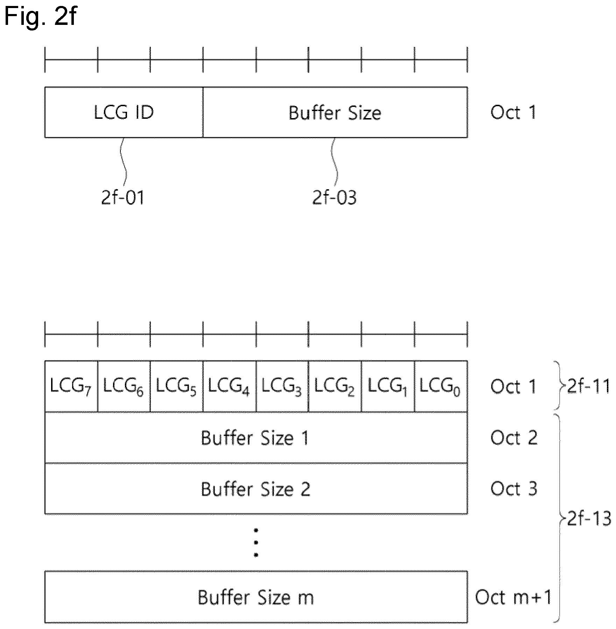

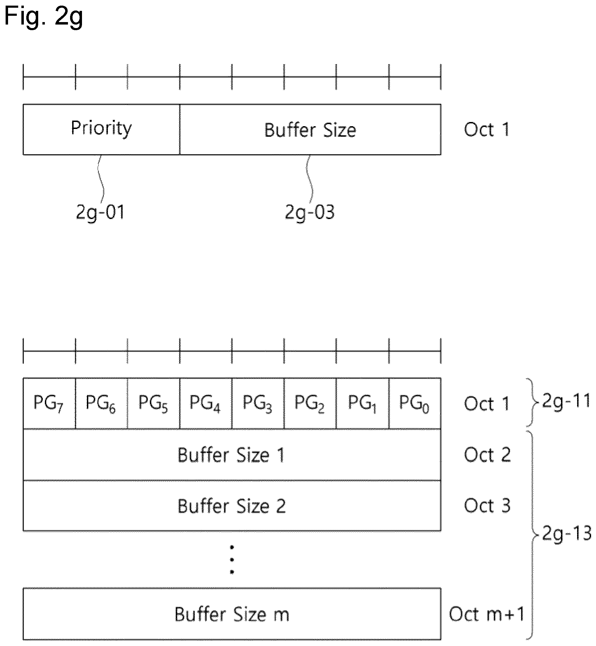

FIG. 2a is a diagram illustrating operations of a terminal and a base station according to an embodiment of the present disclosure.

In a wireless communication system including a terminal (2a-01), a first base station (2a-03), and a second base station (2a-05), the terminal and the base station operate as follows.

In step 2a-11, the terminal reports performance to the first base station or another base station. The UE capability information delivery procedure consists of a step in which the UE transmits an RRC control message called UECapabilitylnformation containing UE capability information to the serving eNB when the serving eNB transmits an RRC message requesting UE capability information to the UE. UECapabilitylnformation includes the following information.

### <UECapabilitylnformation>

1. First information related to RRC_INACTIVE: 1-bit information indicating whether the terminal supports RRC_INACTIVE. Regardless of the number of bands supported by the terminal, only one is reported.
2. Second information related to RRC_INACTIVE: Information indicating whether the second resumption procedure is supported. Whether or not the second resume procedure is supported may be indicated for each band supported by the terminal. If the terminal supports n bands, n pieces of 1-bit information are reported.
3. Various types of performance information related to data transmission and reception between the terminal and the base station (for example, whether or not a specific decoding is supported).

A UE supporting RRC_INACTIVE supports the first resumption procedure in all frequency bands supported by the UE. That is, first information related to RRC_INACTIVE support is information applied to a plurality of bands, and second information related to RRC_INACTIVE is information applied to one band. A UE that does not support RRC_INACTIVE does not support the second resumption procedure in any frequency band that it supports. The serving base station refers to the performance of the UE and provides appropriate NR configuration information to the UE. The UE and the serving base station transmit and receive data in the RRC_CONNECTED state, and when data transmission and reception is completed, the serving base station determines to transition the state of the terminal to the RRC_INACTIVE state.

Instep 2a-13, the first base station transmits an RRCRelease message to the terminal. The RRCRelease message contains the SuspendConfig IE and the SuspendConfig contains the following information.

### <SuspendConfig>

1. First UE identifier: UE identifier that can be included in ResumeRequest when state transitions to RRC_CONNECTED. It has a length of 40 bits .
2. Second UE identifier: An identifier of a terminal that can be included in ResuemeRequest when the state transitions to RRC_CONNECTED. It has a length of 24 bits.
3. ran-PagingCycle: Paging cycle to be applied in RRC_INACTIVE state
4. ran-NotificationArealnfo: Configuration information of ran-NotificationArea composed of a list of cells and the like. The terminal initiates a resume procedure when ran_NotificationArea is changed.
5. t380: Timer associated with periodic resume procedure
6. NCC (nextHopChaningCount): Counter used to derive a new security key after performing the resumption procedure
7. Information related to the second resumption procedure: a list of DRBs for which the second resumption procedure is set, and 1-bit information indicating whether the second resumption procedure is set in SRB2. 1-bit information indicating whether the second resume procedure is set in SRB4. Data size threshold of the second resume procedure (hereinafter referred to as dedicated data threshold), reference signal received strength threshold of the second resume procedure (hereinafter referred to as dedicated reference signal received strength threshold)

Among SRB1, SRB2, SRB3, and SRB4, the SRB1 transmits and receives the most important RRC control message, so it is important to quickly transmit the RRC control message as a second resume procedure, and it can be considered that the second resume procedure is highly effective. Although SRB2 and SRB4 are less important than SRB1 because relatively large messages can occur, the effectiveness of the second resume procedure is high because they still transmit important control messages. SRB3 is not used in a state where multiple connections are not established. Therefore, in the present invention, the second resume procedure is explicitly set for SRB2 and SRB4, and the second resume procedure may or may not be set for SRB1 and SRB3. However, if the second resume procedure is set for at least one radio bearer, the second resume procedure is set also for SRB1, and the second resume procedure is not set for SRB3 under any condition.

In step 2a-14, the terminal performs SuspendConfig operation set. The SuspendConfig operation set is applied at a predetermined first or second time point. When the SuspendConfig operation set is executed, the following operations are performed sequentially.

### <SuspendConfig operation set>

1. Apply suspendConfig
2. Reset MAC
3. Reset RLC Entity of SRB1
4. Suspend all SRBs and DRBs
5. Start T380 set to t380
6. Enter RRC_INACTIVE state

The terminal applies the first time point if the second resume related information is included and applies the second time point if it is not included.

The first time point is as follows.

The earlier among the time when 100 ms has elapsed since the reception of the RRCRelease message and the time when the lower layer successfully notified the reception of the RRCRelease message

The second time point is as follows.

The earlier among the time when 60 ms has elapsed after receiving the RRCRelease message or the time when the lower layer successfully notified the receipt of the RRCRelease message.

Since the reliability of the RRCRelease message including the second resume related information must be higher than the reliability of the RRCRelease message without the second resumption information, different time points are used.

In step 2a-15, the UE moves to a new cell. The UE/terminal may reselect a neighboring cell having better radio signal quality by comparing the radio signal quality of the serving cell and the neighboring cell. Alternatively, a cell having a radio signal quality equal to or higher than a predetermined standard may be selected.

Instep 2a-17, the UE receives system information including SIB1 in the new cell. SIB1 may include at least the following two pieces of information.

### <SIB1>

1. T319 value
2. 1-bit information indicating whether the second resume procedure is allowed (or whether such is configured or possible)

If the second resume procedure is allowed, the following information is included in system information (hereinafter referred to as SIB X) other than SIB1 and broadcasted.

### <SIBX>

1. Data size threshold of the second resume procedure (hereinafter referred to as common data threshold)
2. Reference signal reception strength threshold of the second resume procedure (hereinafter referred to as common reference signal reception strength threshold)
3. Random access transmission resource information for the second resume procedure
4. t319ext

The UE receives the SIB X if there is at least one radio bearer for which the second resume procedure is configured, that is, if the second resume procedure is configured in at least one DRB or if the second resume procedure is configured in SRB2 or SRB4.

Upon receiving necessary system information including SIB1, the UE performs the RRC_INACTIVE operation shown in Table 5 in the cell.

In step 2a-19, an event triggering the resume procedure occurs. A resume procedure may be triggered when a higher layer or AS requests resumption of a suspended RRC connection or when new data is generated.

In step 2a-21, the UE triggers one of the first resume procedure and the second resume procedure. If any one of the first set of resume conditions is satisfied, the first resume procedure is triggered.

### <Condition Set for First Resume>

1. The upper layer requests resumption of the suspended RRC connection.
2. RAN paging including the first identifier is received.
3. RNA update occurs.
4. Data has occurred in a radio bearer for which the second resume procedure trigger is permitted, but the second resume conditions are not all satisfied.

If all of the set of second resume conditions are satisfied, the second resume procedure is triggered.

### <Condition Set for Second Resume>

1. Transmittable data is generated in a bearer belonging to the first bearer set.
2. The amount of transmittable data of a bearer belonging to the first bearer set is less than the final data threshold.
*3. The reference signal reception strength of the current serving cell is higher than the final reference signal reception strength threshold.
4. The current serving cell provides transmission resources for the second resume procedure.

A radio bearer for which the second resume procedure trigger is allowed (or for which the second resume procedure is allowed) means a DRB for which the second resume procedure is allowed and an SRB for which the second resume procedure is allowed. In SRB3, the second resume procedure is not allowed, and in SRB2 and SRB4, whether to allow the second resume procedure is explicitly indicated. When the second resume procedure is allowed for at least one radio bearer, the second resume procedure is automatically allowed for SRB1.

The final data threshold is the lower of the dedicated data threshold and the common data threshold. Alternatively, if both the dedicated data threshold and the common data threshold exist, the dedicated data threshold is the final data threshold, and if there is only one, it is the final data threshold. Alternatively, if both the dedicated data threshold and the common data threshold exist, the common data threshold is the final data threshold, and if there is only one, it is the final data threshold.

The final reference signal reception strength threshold is the higher of the dedicated reference signal reception strength threshold and the common reference signal reception strength threshold. Alternatively, if both the dedicated reference signal reception strength threshold and the common reference signal reception strength threshold exist, the dedicated reference signal reception strength threshold is the final reference signal reception strength threshold, and if there is only one, it is the final data threshold. Alternatively, if both the dedicated reference signal reception strength threshold and the common reference signal reception strength threshold are present, the common reference signal reception strength threshold is the final reference signal reception strength threshold, and if there is only one, it is the final data threshold.

When at least one of the first set of conditions is satisfied and all of the second set of conditions are satisfied, that is, when both the first and second resume procedures are triggered, the UE selects the second resume procedure.

In step 2a-23, the UE performs the first resume procedure or the second resume procedure with the base station.

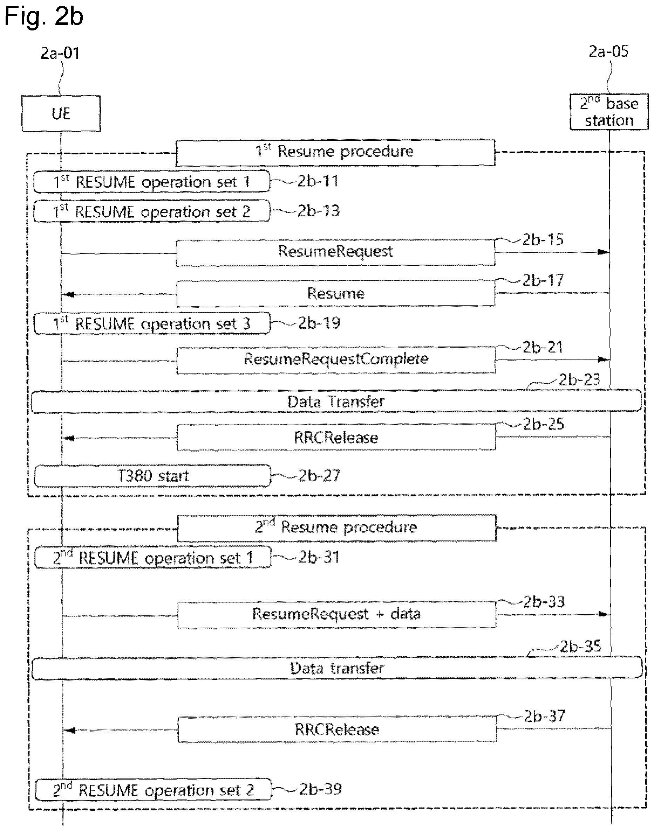

FIG. 2b is a diagram illustrating a first resume procedure and a second resume procedure according to an embodiment of the present disclosure.

The first resume procedure is as follows.

In step 2b-11, the terminal performs the first resume operation set 1. The first resume operation set 1 refer to operations performed when the first resume procedure is initiated and is as follows. By performing the second operation set, the terminal can receive a downlink control message from the base station through SRB1.

### <First Resume Operation Set 1>

1. Apply default SRB1 configuration
2. Apply default MAC Cell Group configuration
3. Start T319 set to t319 received from SIB1

The default SRB1 configuration is as follows.

**<Table 5>**

| **Name** | **Value** | | |
|---|---|---|---|
| | SRB1 | SRB2 | SRB3 |
| *PDCP-Config* | Infinity | | |
| *>t-Reordering* | | | |
| *RLC-Config* CHOICE | Am | | |
| *ul-AM-RLC* | | | |
| *>sn-FieldLength* | size12 | | |
| *>t-PoIIRetransmit* | ms45 | | |
| *>pollPDU* | infinity | | |
| *>pollByte* | infinity | | |
| *>maxRetxThreshold* | t8 | | |
| *dl-AM-RLC>sn-* | | | |
| *FieldLength* | size12 | | |
| *>t-Reassembly* | ms35 | | |
| *>t-StatusProhibit* | ms0 | | |
| *logicalChannelIdentity* | 1 | 2 | 3 |
| *LogicalChannelConfig* | | | |
| *>priority* | 1 | 3 | 1 |
| *>prioritisedBitRate* | Infinity | | |
| *>logicalChannelGroup* | 0 | | |

The default MAC Cell Group configuration is as follows.

**<Table 6>**

| **Name** | **Value** |
|---|---|
| MAC Cell Group configuration | |
| *bsr-Config* | |
| *>periodicBSR-Timer* | sf10 |
| *>retxBSR-Timer* | sf80 |
| *phr-Config* | |
| *>phr-Periodic Timer* | sf10 |
| *>phr-ProhibitTimer* | sf10 |
| *>phr-Tx-PowerFactorChange* | dB1 |

T319, which is set to t319, is a timer driven so that a follow-up action, such as transition to RRC_IDLE, can be performed if the first resume procedure fails. T319 set to t319 is stopped when RRCResume is received. If RRCResume is not received until T319 set to t319 expires, the terminal performs the T319 expiration operation set.

### <T319 Expiration Operation Set>1. Reset MAC

2. Discard UE Inactive AS Context
3. Release suspendConfig
4. Discard the security key
5. Release all RLC Entities, PDCP Entities, and SDAP Entities
6. Transition to RRC_IDLE and perform cell selection operation

In step 2b-13, the terminal performs the first resume procedure operation set 2. The first resume procedure operation set 2 includes operations performed before sending a ResumeRequest.

### <First Resume Procedure Operation Set 2>

0. Restore RRC configurations of UE Inactive AS context excluding masterCellGroup and PDCP-config
1. Calculate resumeMAC-I: A 16-bit message verification code is calculated using the first security key (a security key used in the previous RRC_CONNECTED state or a security key used at the time of receiving RRCRelease).
2. Derivation of the second base station security key using NCC. The second security key, the third security key, the fourth security key, and the fifth security key are derived from the security key of the second base station.
3. Configure all radio bearers except SRB0 to use the second security key and the third security key or the fourth security key and the fifth security key
3. Reset PDCP Entity of SRB 1
4. Resume SRB1

In step 2b-15, the terminal transmits a ResumeRequest message to the second base station. The MAC PDU containing the ResumeRequest message does not include data of other radio bearers. ResumeRequest includes the following information.

### <ResumeRequest>

1. First identifier or second identifier: Among the first identifier and second identifier given in SuspendConfig, an identifier indicated in system information is included.
2. resumeMAC-I: 16-bit message verification code to ensure integrity of resumeRequest message. The terminal calculates resumeMAC-I using the previous security key (the security key used in the previous RRC_CONNECTED state or the security key used at the time of receiving the RRCRelease).
3. resumeCause: 4-bit information that represents one among emergency, highPriorityAccess, mt-Access, mo-Signalling, mo-Data, mo-VoiceCall, mo-VideoCall, mo-SMS, rna-Update, mps-PriorityAccess, mcs-PriorityAccess, SmallDataTransfer.

The terminal performing the first resume procedure selects one of the values other than smallDataTransfer as resumeCause. This is so that the base station can determine whether to resume the second resume procedure through resumeCause.

Instep2b-17, the terminal receives RRCResume. RRCResume contains the following information.

### <RRCResume>

1. masterCellGroup: CellGroupConfig for the master cell group, including RLC bearer information, MAC configuration information, PHY configuration information, SpCell configuration information, etc.
2. radioBearerConfig: This is radio bearer configuration information and includes SRB configuration information and DRB configuration information, etc.

In step 2b-19, the terminal performs the first resume procedure operation set 3.

### <First Resume Procedure Operation Set 3>

1. Stop T319
2: Stop T380
3: Restore and apply masterCellGroup of UE Inactive AS Context
4: Apply CellGroupConfig and radioBearerConfig of RRCResume
5. Restart SRB2, SRB3 and all DRBs
6. Transition to RRC_CONNECTED state
7. Stop the cell reselection process

In step 2b-21, the terminal transmits an RRCResumeComplete message to the second base station. The RRCResumeComplete message includes PLMN identifier information selected by the UE.

In step 2b-23, the terminal and the second base station transmit and receive data. At this time, the terminal may transmit MAC CE such as BSR or PHR to the base station together. When the BSR trigger condition is satisfied, the UE multiplexes the BSR to the uplink MAC PDU and transmits the same. When the PHR trigger condition is met, the UE multiplexes the PHR MAC CE with the uplink MAC PDU and transmits the multiplexed PHR MAC CE. BSR trigger conditions include generation of new data with high priority, expiration of a periodic timer, and the like. The PHR trigger condition includes a change in reception strength of a reference signal greater than or equal to a predetermined standard, activation of a new secondary cell, and the like.

In step 2b-25, when data transmission and reception with the terminal is completed, the second base station transmits RRCRelease including SuspendConfig to the terminal to transition the terminal to the RRC_INACTIVE state.

In step 2b-27, upon receiving the RRCRelease message including SuspendConfig, the terminal starts T380.

The second resume procedure is as follows.

In step 2b-31, the UE performs the second resume operation set 1. The second resume operation set 1 refer to operations performed when the second resume procedure is triggered and include the following. By performing the second resume operation set 1, the terminal may receive a downlink control message from the base station through the SRB1 and, using the radio bearer for which the second resume procedure is allowed (or for which data transmission is allowed in the INACTIVE state, or for which the second resume procedure is configured), may transmit uplink data and receive downlink data.

### <Second Resume Operation Set 1>

0: Restore all RRC configurations of UE Inactive AS Context (including radio bearer settings of the first set of bearers, masterCellGroup, and PDCP-config)
1. Start T319ext set to t319ext
2. Stop T380
3. Calculate resumeMAC-I: A 16-bit MAC-I is calculated using the previous K_RRCint, that is, the first security key (K_RRCint used in the previous RRC_CONNECTED state or K_RRCint used when RRCRelease was received).
4. Derive the 2nd base station security key using the 1st base station security key and NCC. The 2nd security key, the 3rd security key, the 4th security key, and the 5th security key are derived from the security key of the 2nd base station.
5. Configuration to use the 2nd security key and the 3rd security key or the 4th security key and the 5th security key for the 1st bearer set
6. Reset the PDCP entity of the first bearer set
7. Resuming radio bearers of the first bearer set
8. Stop the cell reselection process
9. Initiate the second cell reselection procedure

T319ext set to t319ext is a timer that operates such that follow-up measures, such as transition to RRC_IDLE, etc., can be performed if the second resume procedure fails. The T319, T319ext and T380 have the following features.

**<Table 7>**

| First reconfiguration procedure | | |
|---|---|---|
| | T380 | T319 |
| Configured by | RRCRelease | SIB1 |
| Start | Upon reception of RRCRelease | After start of first reconfiguration procedure, between the time point when configuration received from SIB1 is applied and the time point when SRB1 resumes |
| Stop | Upon reception of RRCResume and before applying cell group configuration | Upon reception of RRCResume and before applying cell group configuration |
| Upon expiration | Initiating periodic RNA update in the current cell | T319 expiry operation set |

| Second reconfiguration procedure | | |
|---|---|---|
| | T380 | T319ext |
| Configured by | RRCRelease | SIB X |
| Start | Upon reception of RRCRelease | After start of second reconfiguration procedure, between the time point when SRB1 configuration stored in UE Inactive AS Context is applied, and the time point when SRB1 resumes |
| Stop | After start of second reconfiguration procedure, between the time point when SRB1 configuration stored in UE Inactive AS Context is applied, and the time point when SRB1 resumes | Upon reception of RRCRelease or before applying cell group configuration |
| Upon expiration | Determining whether to initiate periodic RNA update in the current cell | T319ext expiry operation set |

In the first resume procedure, the reason why the T380 and T319 are started after message reception but before configuring the cell group configuration information, is to prevent the initiation of unnecessary subsequent operations due to expiration of these timers upon stopping of these timers as the first operation after receiving an RRCResume message. In the first resume procedure, T319 is started between the application time of the default SRB1 setting and the resume time of SRB 1 after the start of the first resumption procedure, such that T319 is started at a time point closest to the SRB1 available time.

In the second resumption procedure, T319ext is executed between the time of applying the SRB1 settings stored in the UE Inactive AS Context and the time of resuming SRB1, such that T319ext is started at a time point closest to the SRB1 available time.

In the second resumption procedure, T380 is executed between the time of applying the SRB1 settings stored in the UE Inactive AS Context and the time of resuming SRB1, such that T380 and T319ext are defined to start at time points which are as close as possible in order to reduce the load related to timer processing at the terminal. The time point of applying the SRB1 configuration stored in the UE Inactive AS Context and the time point of applying the radio bearer configuration of the first bearer set stored in the UE Inactive AS Context are the same. The timing of resuming the SRB1 is the same as the timing of resuming the radio bearers of the first bearer set.

If RRCResume is not received until T319ext set to t319ext expires, the terminal may perform the T319ext expiration operation set or the T319 expiration operation set. The base station may set, in SuspendConfig or in system information, which among the T319ext expiration operation set and the T319 expiration operation set is to be selected.

### <T319ext Expiration Operation Set>

1. Reset MAC
2. Maintain UE Inactive AS Context
3. Maintain suspendConfig
4. The first base station security key and the first security key are discarded in the UE Inactive AS Context, and the second base station security key and the third security key are stored in the UE Inactive AS Context.
5. Suspend all SRBs and DRBs
6. Start T380 set to t380
7. Stop Second Cell Reselection Procedure
8. Execute the cell selection procedure
9. Initiate the RNA renewal process after selecting a suitable cell

The first bearer set is a set of radio bearers for which the second resume procedure is explicitly or implicitly established, and is composed of SRB1 and radio bearers related to the second resume procedure. A radio bearer related to the second resume procedure means a radio bearer to which the second resume procedure is explicitly allowed or a radio bearer to which the second resume procedure is explicitly set.

Stopping the cell reselection procedure means stopping the existing cell reselection procedure performed before proceeding with the second resume procedure. In the existing cell reselection procedure, the cell reselection priority provided by the base station is applied to select a frequency to preferentially camp, and each cell is ranked in consideration of the reference signal reception strength and various offsets of cells within the selected frequency. This is a procedure for reselecting the cell with the highest rank.

When the second cell reselection procedure starts, the terminal stops using the cell reselection priorities and offsets indicated by the base station and uses the following parameters.

### <Second Cell Reselection Procedure>

1. Increase the cell reselection priority of the current serving frequency to the highest priority
2. Increase the 1st Qhyst by a predetermined value. Or apply 2nd Qhyst

When determining the cell priority, the UE puts a weight equal to Qhyst on the current serving cell. That is, the priority is determined by adding Qhyst to the reference signal reception strength of the actual serving cell. The first Qhyst is included in SIB2 and broadcasted. The second Qhyst or the predetermined value is included in SIBX and broadcasted.

In step 2b-33, the UE transmits a MAC PDU including a first SDU including a ResumeRequest message and a second SDU including data of the first bearer set (or data of a bearer for which the second resume procedure is set) to the second base station. The terminal performing the second resume procedure selects small Data Transfer as the ResumeCause. The UE may include a priority-based BSR MAC CE and a PHR MAC CE in the MAC PDU. When the BSR/PHR inclusion condition is satisfied and the BSR/PHR cancellation condition is not satisfied, the UE transmits the priority-based BSR MAC CE and PHR MAC CE in the MAC PDU. Even if the BSR/PHR inclusion condition is satisfied, the UE transmits the MAC PDU without the priority-based BSR and PHR if the BSR/PHR cancellation condition is satisfied.

### <BSR/PHR Inclusion Condition>

When there is subsequent data to be transmitted after transmission of the MAC PDU including the ResumeRequest (or the first uplink MAC PDU of the second resume procedure), or when there is an uplink grant for transmission of the MAC PDU including the ResumeRequest (or the first uplink grant of the second resume procedure) that cannot accept all transmittable data

### <BSR/PHR Cancellation Condition>

All possible transmittable data can be accommodated if the uplink grant for MAC PDU transmission including the ResumeRequest (or the first uplink grant of the second resume procedure) does not include at least one of a subheader corresponding to the triggered BSR and a subheader corresponding to the triggered PHR, but all transmittable data cannot be accommodated if at least one among the subheader corresponding to the triggered BSR and the subheader corresponding to the triggered PHR is included.

In step 2b-35, the UE and the base station transmit and receive data of the first bearer set. Data of the first bearer set is scheduled by C-RNTI, and the UE monitors the frequency domain and time period for transmitting and receiving small amount of data (or for transmitting and receiving data of the second resume procedure) indicated by SIB X.

When data transmission is completed, the base station determines to end the second resume procedure.

In step 2b-37, the second base station transmits RRCRelease including SuspendConfig to the UE to terminate the second resume procedure. When the UE performing the second resume procedure receives the RRCRelease including SuspendConfig, it performs second resume procedure operation set 2 to end the second resume procedure.

### <Second Resume Operation Set 2>

1. Stop monitoring the frequency domain and time period for transmitting and receiving small amounts of data, as indicated by SIB X
2. Reset MAC
3. Update suspendConfig with newly received information
4. In the UE Inactive AS Context, the first base station security key and the first security key are discarded, and the second base station security key and the third security key are stored.
5. Suspend all SRBs and DRBs except SRB0
6. Start the T380 configured with the newly received t380
7. Stop Second Cell Reselection Procedure
8. Initiation of the first cell reselection procedure

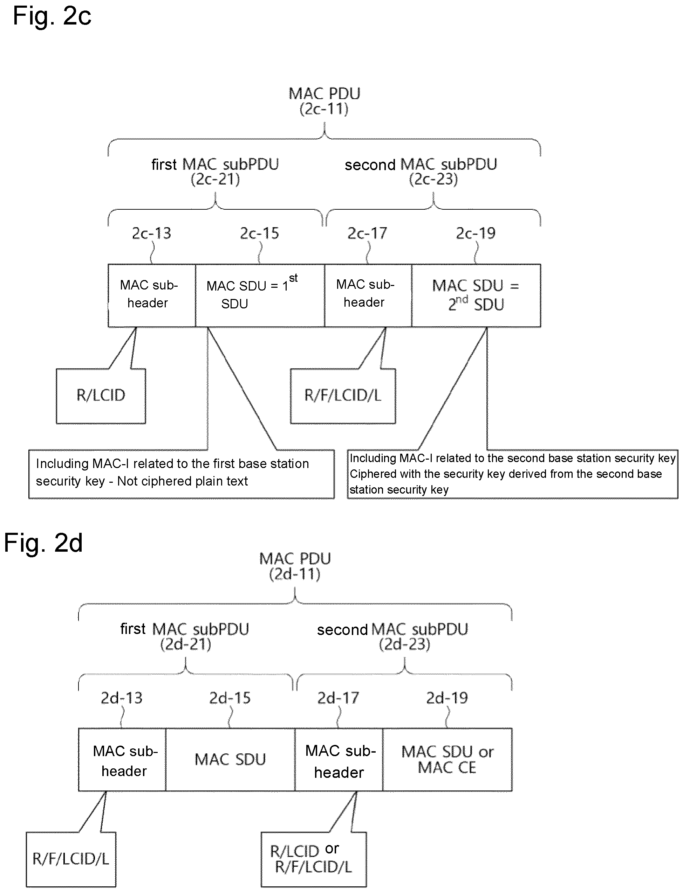

FIG. 2c is a diagram illustrating a structure of an uplink MAC PDU used in a second resume procedure.

The MAC SDU (first SDU) (2c-15) that includes the ResumeRequest message is located at the beginning of the MAC PDU (2c-11), and the MAC SDU (second SDU) (2c-19), that includes transmittable data of the first bearer set (transmittable data of the bearer for which the second resume procedure is established), is located at the rear of the MAC PDU. This is to enable the base station receiving the MAC PDU to recognize that the MAC PDU is a MAC PDU related to the second resume as quickly as possible. The terminal includes a part of the MAC-I (resumeMAC-I) calculated with the first security key (previously used K_RRCint) in the first SDU, and includes the MAC-I derived from the fifth security key (a new K_UPenc derived from the second base station security key) in the second SDU. The MAC subheader (2c-13) of the first SDU consists of two R bits and an LCID field, and the MAC subheader (2c-17) of the second SDU consists of one R bit, an F field, an LCID field and an L field. The LCID field indicates which logical channel the corresponding MAC SDU belongs to or which MAC CE the corresponding MAC CE is, and the L field indicates the number of bytes of the corresponding MAC SDU or MAC CE. A MAC SDU or MAC CE corresponding to one MAC subheader is called a MAC subPDU. The MAC PDU (2c-11) shown in 2c is composed of two MAC subPDUs (2c-21 and 2c-23). Hereinafter, the MAC PDU structure shown in FIG. 2c is referred to as MAC PDU structure 1. MAC PDU structure 1 is characterized in that a MAC subPDU having an R/LCID subheader and including a MAC SDU located in front of a MAC subPDU having at least one R/F/LCID/F subheader and including a MAC SDU. As described above, this feature allows the base station to process the ResumeRequest message as early as possible.

FIG. 2d is a diagram showing the structure of a general uplink MAC PDU. Although a MAC PDU including two MAC subPDUs is taken as an example, one MAC PDU may include two or more MAC subPDUs. Hereinafter, the MAC PDU structure shown in FIG. 2d is referred to as MAC PDU structure 2. In MAC PDU structure 2, a MAC subPDU having an R/LCID subheader is located after a MAC subPDU including a MAC SDU having an R/F/LCID/F subheader. A MAC subPDU having an R/LCID subheader corresponds to a MAC CE in most cases, and by placing the MAC subPDU including the MAC CE behind the MAC subPDU including the MAC SDU, the UE can process the MAC subPDU including the MAC SDU in advance before receiving the uplink link grant.

The first SDU (2c-15) is the first RRC control message received by the base station. Therefore, it is necessary for the base station and the UE to process the first SDU by applying the same configuration without prior consultation. On the other hand, the 2nd SDU (2c-20) can be processed after the BS processes the 1st SDU, and it is also possible to process it after the BS restores the UE Inactive AS Context. Therefore, the second SDU may be processed according to the setting of UE Inactive AS Context.

In the present invention, the first setting is applied to the first SDU and the second setting is applied to the second SDU. The first setting refers to a setting pre-determined in the standard (or a setting standardized as one value), and the second setting refers to a setting stored in the UE Inactive AS Context. Normally, one MAC PDU includes only the MAC SDU to which the first configuration is applied or only the MAC SDU to which the second configuration is applied, but in the present invention, the MAC SDU to which the first configuration is applied and the MAC SDU to which the second configuration is applied to one MAC PDU include and transmit. This is to more quickly transmit the MAC SDU to which the second configuration is applied.

The first configuration and the second configuration may include at least PDCP configuration, RLC configuration, and logical channel configuration. PDCP configuration of the first configuration is PDCP non-use, RLC configuration of the first configuration is RLC TM, logical channel configuration of the first configuration is the highest priority, LCG ID 0, LCID 0, and the like. Alternatively, the first setting may be a default SRB1 setting.

The second configuration of an arbitrary bearer for which the second resume procedure is established is as follows. PDCP configuration is the PDCP configuration of the bearer stored in the UE Inactive AS Context, RLC configuration is the RLC configuration of the RLC bearer associated with the bearer stored in the UE Inactive AS Context (for example, information indicating that RLC AM is configured and various timer values), the logical channel configuration is the logical channel configuration of the RLC bearer associated with the corresponding bearer stored in the UE Inactive AS Context. The UE applies the settings stored in the UE Inactive AS Context to the PDCP and RLC settings as they are. The UE applies only some of the settings stored in the UE Inactive AS Context for logical channel settings and does not apply the rest as if they were not set. The logical channel configuration of the radio bearer belonging to the first bearer is composed of LCID, LCG ID, priority, and various restrictions related settings. When transmitting data of the first bearer set during the second resume procedure, the UE uses stored values for the logical channel identifier and priority, and processes the settings related to each type of restriction as if they were not set. Settings related to each type of restriction include, for example, allowedServingCells, allowedSCS-List, maxPUSCH-Duration, and the like. If such restriction-related settings are not set, the UE determines that there is no restriction on the corresponding logical channel and determines whether to transmit/receive data on the logical channel. The stored restriction-related settings may be applied when the first resumption procedure is initiated.

When the 1st SDU (2c-15) and the 2nd SDU (2c-19) are multiplexed in one MAC PDU during the second resume procedure, the UE sets a predefined setting in the standard for the 1st SDU, that is, PDCP not used, RLC TM, highest priority, LCID 0, LCG ID 0 are applied. And for the 2nd SDU, the UE sets an overall PDCP configuration of the associated bearer stored in the UE Inactive AS Context, an overall RLC configuration of the associated RLC bearer stored in the UE Inactive AS Context, applies a part of the logical channel configuration of the RLC bearer associated with the corresponding bearer stored in the UE Inactive AS Context, and does not apply the rest of the logical channel configuration. The logical channel configuration to be applied above, may be LCID, priority, LCG ID, and the logical channel configuration not to be applied may be allowedServingCells, allowedSCS-List, maxPUSCH-Duration, and the like.

The UE generates SDU1 by applying the first setting and generates SDU2 by applying the second setting.

The uplink MAC PDU may include a MAC SDU or MAC CE. The MAC CE collectively refers to control information generated and transmitted/received in the MAC layer, such as BSR or PHR. The MAC CE may have a fixed size or a variable size. The L field is not used in the MAC subheader of MAC CE having a fixed size. A general MAC SDU has a variable size, and an L field is used in a corresponding subheader. A MAC subPDU containing a MAC CE is always located after a MAC subPDU containing a MAC SDU. Therefore, in a general uplink MAC PDU in which at least two MAC subPDUs are multiplexed, a MAC subPDU having an L field is preceded and a MAC subPDU without an L field is positioned later. In general, all MAC SDUs included in one uplink MAC PDU are protected by a security key derived from the same security key.

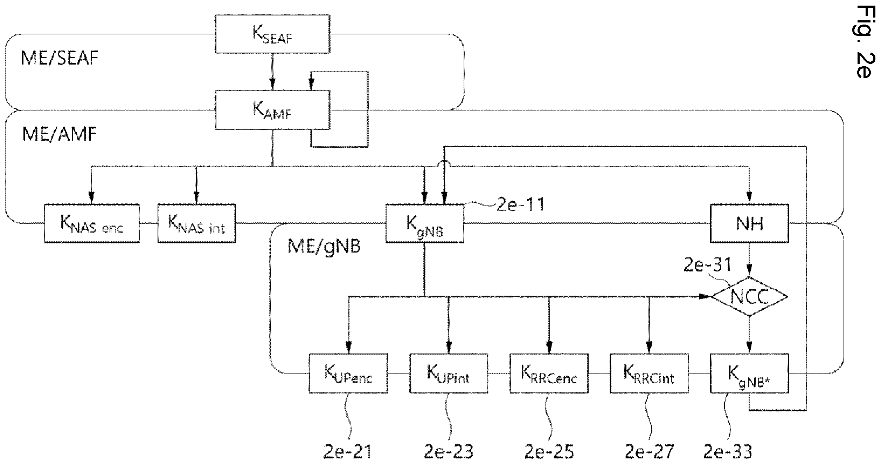

Fig. 2e is a diagram showing a hierarchical structure of security keys.

The UE and the base station perform integrity protection and encryption using security keys derived from KgNB (2e-11). KgNB (2e-11) derives four sub-keys: K_UPenc (2e-21), K_UPint (2e-23), K_RRCenc (2e-25), and K_RRCint (2e-27). KgNB derives KgNB* (2e-33) by using NCC (2e-31) as an input during handover or resume procedure, and new lower security keys are derived from KgNB*. In FIG. 2c, the first SDU (2c-15) is integrity protected by K_RRCint derived from KgNB used in the previous cell, that is, at least a part of the MAC-I calculated with K_RRCint is included in the first SDU and transmitted together, and the second SDU (2c-19) is integrity protected by K_UPint among KgNB* lower security keys calculated from KgNB and NCC used in the previous cell, and is encrypted and transmitted by K_UPenc among KgNB* lower security keys. That is, during the second resume procedure, some MAC SDUs among MAC SDUs included in one MAC PDU are protected by a security key derived from KgNB, and other MAC SDUs are protected by a security key derived from KgNB*. The MAC SDUs multiplexed to the MAC PDU (2d-11) of FIG. 2d are encrypted or integrity-protected by a lower security key of KgNB or KgNB* and then transmitted. KgNB previously used or used at the time of receiving the RRCRelease is the first base station security key, K_RRCint derived from the first base station security key is the first security key, KgNB * (or derived from the first base station security key and NCC KgNB, or KgNB derived from the second resumption procedure operation set 1) is the second base station security key, and K_RRCenc, K_RRCint, K_UPenc, and K_UPint derived from the second base station security key are referred to as the second security key, the third security key, the fourth security key and the fifth security key, respectively. Conventionally, one MAC PDU is ciphered, or integrity protected with security keys derived from one base station security key. In the present invention, by multiplexing MAC SDUs protected with security keys derived from different base station security keys into one MAC PDU, the MAC SDUs are transmitted more quickly.

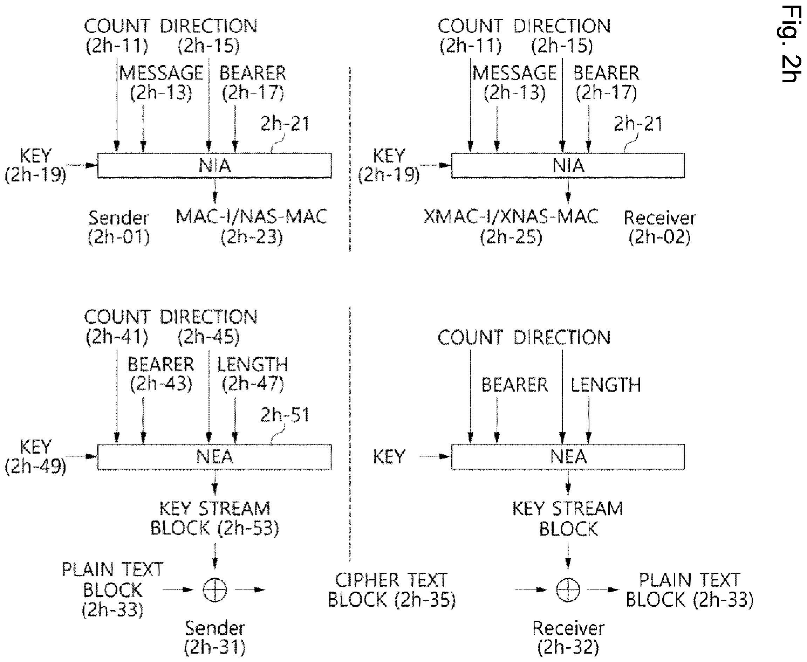

FIG. 2h is a diagram illustrating a MAC-I calculation process and a ciphering process.

The transmitting end (2h-01) generates a MAC-I and transmits it to the receiving end (2h-02). The transmitter transmits security key (2h-19), COUNT (2h-11), message (2h-13), DIRECTION (2h-15), and BEARER (2h-17) to NIA (NR Integrity Algorithm) (2h-21). It inserts and generates MAC-I (2h-23) and transmits the generated MAC-I or part of it to the receiving end.

The receiving end also inserts the security key (2h-19), COUNT (2h-11), message (2h-13), DIRECTION (2h-15), and BEARER (2h-17) into the NR integrity algorithm (NIA2h-21). XMAC-I (2h-25) is calculated, and if the calculated XMAC-I and the received MAC-I are the same, it is determined that integrity is verified. At the transmitting and receiving ends, the same NR integrity algorithm (NIA 2h-21), the same (2h-19), the same COUNT (2h-11), the same message (2h-13), the same DIRECTION (2h-15), and the same BEARER (2h -17) must be used so that the MAC-I and the XMAC-I can be the same. The MAC-I has a size of 32 bits.

The MAC-I included in the first SDU (2c-15) of the uplink MAC PDU (2c-11) of the second resume procedure includes the first security key, COUNT set to 0, DIRECTION set to 0, and BEARER set to 0, and additionally, the last 16 bits of the MAC-I calculated using a message composed of a terminal identifier and a cell identifier.

The MAC-I included in the second SDU (2c-19) of the uplink MAC PDU (2c-11) of the second resume procedure is for a PDCP SDU belonging to bearer set 1, and the fifth security key, COUNT of the PDCP SDU, DIRECTION set to 0, DRB identifier BEARER, and PDCP SDU message.

The transmitting end (2h-31) processes the simple text as a ciphered block and transmits it to the receiving end (2h-32) as follows. The transmitting end inserts the security key (2h-49), COUNT (2h-41), BEARER (2h-43), DIRECTION (2h-45), and LENGTH (2h-47) into NEA (NR Encryption Algorithm) (2h-51) to generate a keystream block (2h-53). The transmitting end performs an exclusive OR operation on the generated keystream block and the simple text (2h-33) to generate a ciphered block (2h-35) and transmits the generated ciphered block to the receiving end. The LENGTH is the length of simple text.

The receiving end deciphers the received ciphered block into simple text using the same input and the same security key.

The second SDU (2c-19) of the uplink MAC PDU (2c-11) of the second resume procedure may include the PDCP SDU of ciphered bearer set 1. The PDCP SDU is encrypted using a fourth security key, COUNT of the PDCP SDU, DIRECTION set to 0, BEARER as a DRB identifier, and LENGTH as the length of the PDCP SDU.

2f is a diagram illustrating structures of a first BSR MAC CE and a second BSR MAC CE, which are logical channel group-based BSRs.

The first BSR MAC CE is composed of one logical channel group identifier field (2f-01) and one first buffer size field (2f-03). The logical channel group identifier field (2f-01) has a size of 3 bits and indicates one among logical channel group identifiers between 0 and 7. The first buffer size field (2f-03) has a size of 5 bits and indicates one of the first buffer size indices between 0 and 31. A first buffer size index of 0 means that there is no transmittable data in logical channels belonging to the corresponding logical channel group. The first buffer size index 31 means that the sum of transmittable data of logical channels belonging to the corresponding logical channel group is greater than the 30th first buffer size. The first buffer size index 1 means that the sum of transmittable data of the logical channels belonging to the corresponding logical channel group is greater than 0 and is equal to or smaller than the first buffer size. The first buffer size index n (2 <= n <= 30) indicates that the sum of transmittable data of the logical channels belonging to the corresponding logical channel group is greater than the size of the n-1^{th} first buffer and smaller than or equal to the size of the n^{th} first buffer. The size of such 30 first buffers are defined in the standard.

The 2nd BSR MAC CE consists of 8 LCGi bits (2f-11) and a plurality of second buffer size fields (2f-13). The LCGi bit indicates whether the second buffer size field for logical channel group i exists. For example, LCG1 indicates whether a second buffer size field for logical channel group 1 exists. If this field is 1, the second buffer size field for the corresponding LCG exists. The second buffer size field has a size of 8 bits and indicates one among second buffer size indices between 0 and 255. A second buffer size index of 0 means that there is no transmittable data in logical channels belonging to the corresponding logical channel group. The second buffer size index of 254 means that the sum of transmittable data of the logical channels belonging to the corresponding logical channel group is greater than the 253rd second buffer size. The second buffer size index of 1 means that the sum of transmittable data of logical channels belonging to the corresponding logical channel group is greater than 0 and smaller than or equal to the first second buffer size. The second buffer size index n (2 <= n <= 253) indicates that the sum of transmittable data of the logical channels belonging to the corresponding logical channel group is larger than the n-1^{th} second buffer size and smaller than or equal to the n^{th} second buffer size. The second buffer size index 255 is not used. The 252 secondary buffer sizes are defined in the standard.

A logical channel group is established when configuring a logical channel. Logical channels and logical channel groups are established by RRC control messages.

2g is a diagram showing structures of a third buffer state MAC CE and a fourth BSR MAC CE, which are priority-based BSRs. The third buffer status MAC CE consists of one priority identifier field (2g-01) and one third buffer size field (2g-03). The priority identifier field has a size of 4 bits. The priority identifier field indicates a value between 0 and 15, which corresponds to a logical channel priority between 1 and 16 on a one-to-one basis. That is, the sum of 1 to the value of the priority identifier field means the actual priority. For example, the priority identifier field 0000 means priority 1, 0001 means priority 2, and 1111 means priority 16. The third buffer size field has a size of 4 bits and indicates a third buffer size index between 0 and 15. Unlike the first buffer size index 0 or the second buffer size index 0, the third buffer size index 0 means that the total transmittable data of the logical channels having the corresponding priority is smaller than 0 and the first tertiary buffer size. The third buffer size index n (2 <= n <= 14) indicates that the sum of transmittable data of the logical channels having the corresponding priority is greater than the size of the n-1^{th} buffer and smaller than or equal to the size of the n^{th} buffer. The third buffer size index 15 means that the sum of transmittable data of the logical channels having the corresponding priority is greater than the 15^{th} tertiary buffer size. The first buffer sizes, the second buffer sizes and the third buffer sizes are predefined in the specification. The 15 third buffer sizes are defined in the standard.

The fourth BSR MAC CE consists of PGi bits and a plurality of second buffer size fields.

PGi indicates whether the second buffer size field of the priority group identifier i exists. A priority group is composed of at least one priority, and eight groups from priority group 0 to priority group 7 can be set in one cell. The priority of each logical channel is set by a predetermined RRC control message received from the first NR cell, and the mapping relationship between priorities and priority groups is set by predetermined system information received from the second NR cell. The system information may be SIB X. For example, a list of priorities mapped per priority group may be broadcast through the SIB X.

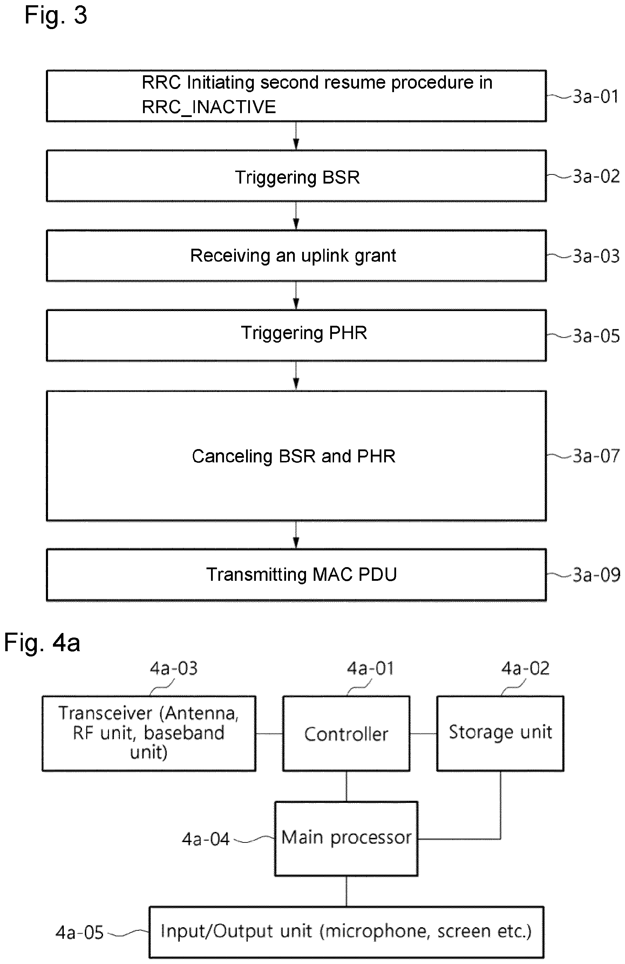

Fig. 3 is a flow diagram illustrating an operation of a terminal.

In step 3a-01, the UE in the RRC_INACTIVE state initiates the second resumption procedure.

In step 3a-02, the UE triggers the priority-based BSR. A priority-based BSR is triggered when the second resume procedure is initiated.

In step 3a-03, the UE receives an uplink grant. The uplink grant may be received as part of a random access response message during the random access procedure or as downlink control information during the second process. The uplink grant includes the size of an uplink MAC PDU to be transmitted by the UE, transmission resources to be used when transmitting the MAC PDU, and coding information.

In step 3a-05, the UE determines whether to trigger the PHR. The UE triggers PHR if RRC_INACTIVE UE initiates second resume procedure and PHR-config is store in the MAC configuration information in UE context. The UE uses a single entry PHR format even if it is configured to use a multi-entry PHR format in the stored PHR-config. A multi-entry PHR format consists of multiple power headroom fields and a single entry PHR format consists of one power headroom field.

In step 3a-07, the UE determines whether to include a third MAC subPDU including the BSR MAC CE and a fourth MAC subPDU including the PHR MAC CE in the MAC PDU to be transmitted through the uplink grant. The UE cancels the triggered PHR and the triggered BSR together if the uplink grant can accommodate all data available for transmission when one of the first MAC subPDU including the BSR MAC CE and the second MAC subPDU including the PHR MAC CE is not included but the uplink grant cannot accommodate all data available for transmission when the first MAC subPDU and the second MAC subPDU are included. Since no more uplink transmission is not needed if all data available for transmission can be transmitted, the UE cancels BSR and PHR together. Alternatively, the UE determines whether it is possible for the uplink grant to accommodate all data available for transmission if the second MAC subPDU is not included. Then the UE cancel the triggered PHR if it is possible. If not possible, the UE determines whether it is possible for the uplink grant to accommodate all data available for transmission if the first MAC subPDU and the second MAC subPDU are not included. If possible, the UE cancels both PHR and BSR. If not, UE keeps PHR and BSR as triggered.

In step 3a-09, the UE generates and transmits a MAC PDU. The MAC PDU may consist with a first MAC subPDU including an uplink control message including a UE identifier and a resume cause, a second MAC subPDU including data of the first bearer group, a third MAC subPDU including a BSR MAC CE, and 4th MAC subPDU including a PHR MAC CE. Or the MAC PDU may consist with a first MAC subPDU and a second MAC subPDU. The first MAC subPDU includes a first MAC subheader and a first MAC SDU corresponding to an uplink control message, and the second MAC subPDU includes a second MAC subheader and a second MAC SDU corresponding to data of the first bearer group, and the third MAC subPDU consists of a third MAC subheader and a BSR MAC CE, and the fourth MAC subPDU consists of a fourth MAC subheader and a PHR MAC CE.

The first MAC subheader is located immediately before the first MAC SDU, the first MAC SDU is located immediately before the second MAC subheader, the second MAC subheader is located immediately before the second MAC SDU, the second MAC SDU is located immediately before the second MAC subheader, the third MAC subheader is located immediately before the BSR MAC CE, the BSR MAC CE is located immediately before the fourth MAC subheader and the fourth MAC subheader is located immediately before PHR MAC CE.

A part of the first MAC subPDU is protected with a security key derived from the first base station security key, a part of the second MAC subPDU is protected with a security key derived from the second base station security key, and the third MAC subPDU and the fourth MAC suvPDU are not protected.

Predefined configurations are applied to the first MAC subPDU and the fourth MAC subPDU, and the configurations stored in the UE Inactive AS Context are applied to the second MAC subPDU and the third MAC subPDU. More specifically, the fourth MAC subPDU includes the PHR MAC CE to which the single-entry PHR format defined in the default MAC configuration is applied regardless of whether the multi-entry PHR format is configured in the UE Inactive AS Context. The logical channel priority configured (or stored) in the UE Inactive AS Context and the logical channel group information are applied to the third MAC subPDU.

The MAC PDU may consist of an uplink control message including an identifier of the UE and a reason for resuming, and transmittable data, or may include an uplink control message, transmittable data, a first MAC subPDU, and a second MAC subPDU.

FIG. 4a is a block diagram showing the internal structure of a terminal (UE) to which the present invention is applied.

Referring to the drawing, the UE includes a control unit (4a-01), a storage unit (4a-02), a transceiver (4a-03), a main processor (4a-04), and an input/output unit (4a-05).

The controller (4a-01) controls the overall operations of the UE related to mobile communications. For example, the controller (4a-01) transmits and receives signals through the transceiver (4a-03). Also, the controller (4a-01) writes and reads data in the storage unit (4a-02). To this end, the controller (4a-01) may include at least one processor. For example, the controller (4a-01) may include a communication processor (CP) that controls communications and an application processor (AP) that controls upper layers such as application programs. The controller (4a-01) controls the storage unit and the transceiver so that the UE operations of FIGS. 2a, 2b, and 3a are performed. The transceiver is also referred to as a transmitting/receiving unit.

The storage unit (4a-02) stores data such as a basic program for operation of the UE, an application program, and setting information. The storage unit (4a-02) provides stored data according to the request of the control unit (4a-01).

The transceiver (4a-03) includes an RF processing unit, a baseband processing unit, and an antenna. The RF processing unit performs functions for transmitting and receiving signals through a wireless channel, such as band conversion and amplification of signals. That is, the RF processing unit up-converts the baseband signal provided from the baseband processing unit into an RF band signal, transmits the signal through an antenna, and down-converts the RF band signal received through the antenna into a baseband signal. The RF processing unit may include a transmit filter, a receive filter, an amplifier, a mixer, an oscillator, a digital-to-analog converter (DAC), an analog-to-digital converter (ADC), and the like. The RF processing unit may perform MIMO and may receive multiple layers when performing MIMO operation. The baseband processing unit performs a conversion function between a baseband signal and a bit string according to the physical layer standard of the system. For example, during data transmission, the baseband processing unit generates complex symbols by encoding and modulating a transmission bit stream. In addition, when data is received, the baseband processing unit demodulates and decodes the baseband signal provided from the RF processing unit to restore a received bit string. The transceiver is also referred to as a transmitting/receiving unit.

The main processor (4a-04) controls the overall operations except for operations related to mobile communications. The main processor (4a-04) processes the user's input transmitted from the input/output unit (4a-05), stores necessary data in the storage unit (4a-02), and controls the control unit (4a-01) to perform operations related to mobile communications and delivers output information to the input/output unit (4a-05).

The input/output unit (4a-05) is composed of a device that accepts user input, such as a microphone and a screen, and a device that provides information to the user, and performs input and output of user data under the control of the main processor.

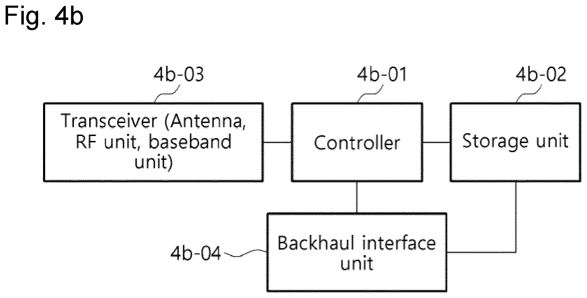

FIG. 4b is a block diagram showing the configuration of a base station according to the present invention.

As shown in such figure, the base station includes a control unit (4b-01), a storage unit (4b-02), a transceiver (4b-03), and a backhaul interface unit (4b-04).

The controller (4b-01) controls the overall operations of the base station. For example, the control unit (4b-01) transmits and receives signals through the transceiver (4b-03) or the backhaul interface unit (4b-04). Also, the controller (4b-01) writes and reads data in the storage unit (4b-02). To this end, the controller (4b-01) may include at least one processor. To allow the base station operations shown in FIGS. 2a and 2b to be performed, the controller (4b-01) controls the transceiver, the storage unit and the backhaul interface.

The storage unit (4b-02) stores data such as a basic program for the operation of the main base station, an application program, setting information, and the like. In particular, the storage unit (4b-02) may store information on bearers assigned to the connected terminal (UE), measurement results reported from the connected terminal, and the like. In addition, the storage unit (4b-02) may store information that is a criterion for determining whether to provide or stop multiple connections to the terminal. Also, the storage unit (4b-02) provides the stored data according to the request of the control unit (4b-01).

The transceiver (4b-03) includes an RF processing unit, a baseband processing unit, and an antenna. The RF processing unit performs functions for transmitting and receiving signals through a wireless channel, such as band conversion and amplification of signals. That is, the RF processor up-converts the baseband signal provided from the baseband processor into an RF band signal, transmits the signal through an antenna, and down-converts the RF band signal received through the antenna into a baseband signal. The RF processing unit may include a transmit filter, a receive filter, an amplifier, a mixer, an oscillator, a DAC, an ADC, and the like. The RF processing unit may perform a downlink MIMO operation by transmitting one or more layers. The baseband processing unit performs a conversion function between a baseband signal and a bit string according to the physical layer standard. For example, during data transmission, the baseband processing unit generates complex symbols by encoding and modulating a transmission bit stream. In addition, when receiving data, the baseband processing unit demodulates and decodes the baseband signal provided from the RF processing unit to restore a received bit stream. The transceiver is also referred to as a transceiver.

The backhaul interface unit (4b-04) provides an interface for communicating with other nodes in the network. That is, the backhaul communication unit 4b-04 converts a bit string transmitted from the main base station to another node, for example, a secondary base station, a core network, etc., into a physical signal, and converts the physical signal received from the other node into a bit string.

## Claims

1. A method for a terminal in a wireless communication system, **characterized in that** the method comprises:
initiating a second resume procedure in an RRC_INAVTICE state;
triggering a BSR (Buffer Status Report);
receiving an uplink grant;
triggering a PHR (Power Headroom Report);
if at least one among a first MAC subPDU containing the BSR and a second MAC subPDU containing the PHR is not included, then the uplink grant is capable of accommodating all data that is transmittable, but if at least one among the first MAC subPDU and the second MAC subPDU is included, and if all data that is transmittable cannot be accommodated, then canceling both the triggered BSR and the triggered PHR; and
transmitting a MAC PDU.

2. The method according to claim 1, wherein,
triggering the PHR, if the PHR is configured in a context of the terminal.

3. The method according to claim 1, wherein,
the MAC PDU is comprised of,
the first MAC subPDU containing an uplink control message that includes a terminal identifier and a resume cause, a third MAC subPDU containing a BSR MAC CE and the second MAC subPDU that includes data of a first bearer set, and a fourth MAC subPDU containing a PHR MAC CE; or
the first MAC subPDU and the second MAC subPDU.

4. The method according to claim 1, wherein,
for the first MAC subPDU and the fourth MAC subPDU, a predefined configuration is applied, and
for the second MAC subPDU and the third MAC subPDU, a configuration stored in a UE Inactive AS Context is applied.

5. A terminal in a wireless communication system, **characterized in that** the terminal comprises:
a transceiver configured to transmit and receive signals; and
a control unit,
wherein the control unit,
initiates a second resume procedure in an RRC_INAVTICE state;
triggers a BSR (Buffer Status Report);
receives an uplink grant;
triggers a PHR (Power Headroom Report);
if at least one among a first MAC subPDU containing the BSR and a second MAC subPDU containing the PHR is not included, then the uplink grant is capable of accommodating all data that is transmittable, but if at least one among the first MAC subPDU and the second MAC subPDU is included, and if all data that is transmittable cannot be accommodated, then cancels both the triggered BSR and the triggered PHR; and
transmits a MAC PDU.
